Europäisches Patentamt

European Patent Office

Office européen des brevets

(19)

(11) **EP 1 084 490 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(21) Anmeldenummer: **99931002.2**

(22) Anmeldetag: **03.05.1999**

(51) Int Cl.$^7$: **G10L 11/00**

(86) Internationale Anmeldenummer:
**PCT/DE99/01323**

(87) Internationale Veröffentlichungsnummer:
**WO 99/059135 (18.11.1999 Gazette 1999/46)**

(54) **ANORDNUNG UND VERFAHREN ZUR ERKENNUNG EINES VORGEGEBENEN WORTSCHATZES IN GESPROCHENER SPRACHE DURCH EINEN RECHNER**

ARRANGEMENT AND METHOD FOR COMPUTER RECOGNITION OF A PREDEFINED VOCABULARY IN SPOKEN LANGUAGE

DISPOSITIF ET PROCEDE DE RECONNAISSANCE D'UN VOCABULAIRE PREDETERMINE DANS UNE PAROLE AU MOYEN D'UN ORDINATEUR

(84) Benannte Vertragsstaaten:
**AT BE DE FR GB NL**

(30) Priorität: **11.05.1998 DE 19821057**

(43) Veröffentlichungstag der Anmeldung:
**21.03.2001 Patentblatt 2001/12**

(73) Patentinhaber: **SIEMENS AKTIENGESELLSCHAFT**
**80333 München (DE)**

(72) Erfinder:
• **BUB, Udo**
**80801 München (DE)**
• **HÖGE, Harald**
**D-82131 Gauting (DE)**

(56) Entgegenhaltungen:
**JP-A- 9 152 886**

• **TAKAMI ET AL.: "A successive state splitting algorithm for efficient allophone modeling" INTERNATIONAL CONFERENCE ON ACOUSTICS, SPEECH AND SIGNAL PROCESSING (ICASSP) 1992, Bd. 1, 23. - 26. März 1992, Seiten 573-576, XP000341211 SAN FRANCISCO, CA, US ISBN: 0-7803-0532-9**
• **LEE ET AL.: "Speaker adaptation based on map estimation of HMM parameters" INTERNATIONAL CONFERENCE ON ACOUSTICS, SPEECH AND SIGNAL PROCESSING (ICASSP) 1993, Bd. 2, 27. - 30. April 1993, Seiten 558-561, XP000427850 MINNEAPOLIS, MN, US ISBN: 0-7803-0946-4 in der Anmeldung erwähnt**

EP 1 084 490 B1

**Beschreibung**

Die Erfindung betrifft eine Anordnung und ein Verfahren zur Erkennung eines vorgegebenen Wortschatzes in gesprochener Sprache durch einen Rechner.

Ein Verfahren und eine Anordnung zur Erkennung gesprochener Sprache sind aus [1] bekannt. Bei der Erkennung gesprochener Sprache werden, insbesondere bis zum Erhalt einer erkannten Wortfolge aus einem digitalisierten Sprachsignal, eine Signalanalyse und eine globale Suche, die auf ein akustisches Modell und ein linguistisches Modell der zu erkennenden Sprache zurückgreift, durchgeführt. Ein akustisches Modell basiert auf einem Phoneminventar, das anhand von Hidden-Markov-Modellen (HMMs) realisiert ist. Während der globalen Suche werden für Merkmalsvektoren, die aus der Signalanalyse hervorgegangen sind, mit Hilfe des akustischen Modells eine passende Wortfolge ermittelt und diese als erkannte Wortfolge ausgegeben. Die zu erkennenden Wörter sind in einem Aussprachelexikon zusammen mit einer phonetischen Umschrift abgespeichert. Der Zusammenhang ist ausführlich in [1] dargestellt.

Zur Erläuterung der nachfolgenden Ausführungen wird an dieser Stelle kurz auf die verwendeten Begriffe eingegangen.

Die Signalanalyse als Phase der computerbasierten Spracherkennung umfaßt insbesondere eine Fouriertransformation des digitalisierten Sprachsignals und eine sich daran anschließende Merkmalsextraktion. Aus [1] geht hervor, daß die Signalanalyse alle zehn Millisekunden erfolgt. Aus sich überlappenden Zeitabschnitten mit einer Dauer von z.B. jeweils 25 Millisekunden werden anhand der Signalanalyse ungefähr 30 Merkmale ermittelt und zu einem Merkmalsvektor zusammengefaßt. Die Komponenten des Merkmalsvektors beschreiben die spektrale Energieverteilung des zugehörigen Signalausschnitts. Um diese Energieverteilung zu erhalten, wird auf jedem Signalabschnitt (25ms-Zeitabschnitt) eine Fouriertransformation durchgeführt. Aus der Darstellung des Signals im Frequenzbereich resultieren die Komponenten des Merkmalsvektors. Nach der Signalanalyse liegt das digitalisierte Sprachsignal in Form von Merkmalsvektoren vor.

Diese Merkmalsvektoren werden der globalen Suche, einer weiteren Phase der Spracherkennung, zugeführt. Wie bereits erwähnt, bedient sich die globale Suche des akustischen Modells und ggf. des linguistischen Modells, um die Folge von Merkmalsvektoren auf Einzelteile der als Modell vorliegenden Sprache (Vokabular) abzubilden. Eine Sprache setzt sich aus einer vorgegebenen Anzahl vom Lauten, sog. Phonemen, zusammen, deren Gesamtheit als Phoneminventar bezeichnet wird. Das Vokabular wird durch Phonemfolgen modelliert und in einem Aussprachelexikon abgespeichert. Jedes Phonem wird durch mindestens ein HMM modelliert. Mehrere HMMs ergeben einen stochastischen Automaten, der Zustände und Zustandsübergänge (Transitionen) umfaßt. Mit HMMs läßt sich der zeitliche Ablauf des Auftretens bestimmter Merkmalsvektoren (selbst innerhalb eines Phonems) modellieren. Ein entsprechendes Phonem-Modell umfaßt dabei eine vorgegebene Anzahl von Zuständen, die linear hintereinander angeordnet sind. Ein Zustand eines HMMs stellt einen Teil eines Phonems (bspw. mit einer Dauer von 10ms) dar. Jeder Zustand ist verknüpft mit einer Emissionswahrscheinlichkeit, die insbesondere nach Gauß verteilt ist, für die Merkmalsvektoren und mit Transitionswahrscheinlichkeiten für die möglichen Übergänge. Mit der Emissionsverteilung wird einem Merkmalsvektor eine Wahrscheinlichkeit zugeordnet, mit der dieser Merkmalsvektor in einem zugehörigen Zustand beobachtet wird. Die möglichen Übergänge sind ein direkter Übergang von einem Zustand in einen nächsten Zustand, ein Wiederholen des Zustands und ein Überspringen des Zustands.

Eine Aneinanderreihung von HMM-Zustände mit den zugehörigen Übergängen über die Zeit wird als Trellis bezeichnet. Um die akustische Wahrscheinlichkeit eines Wortes zu bestimmen, verwendet man insbesondere das Prinzip der dynamischen Programmierung: Es wird der Pfad durch die Trellis gesucht, der den geringsten Fehler aufweist bzw. der durch die größte Wahrscheinlichkeit für ein zu erkennendes Wort bestimmt ist.

Das Ergebnis der globalen Suche ist die Ausgabe bzw. Bereitstellung einer erkannten Wortfolge, die sich unter Berücksichtigung des akustischen Modells (Phoneminventar) für jedes einzelne Wort und des Sprachmodells für die Abfolge von Wörtern ergibt.

Aus [2] ist ein Verfahren zur Sprecheradaption, basierend auf einer MAP-Schätzung (MAP = maximum a posteriori) von HMM-Parametern bekannt.
So ist es laut [2] anerkannt, daß ein sprecherabhängiges System zur Spracherkennung normalerweise bessere Ergebnisse als ein sprecherunabhängiges System liefert, sofern ausreichend Trainingsdaten verfügbar sind, die eine Modellierung des sprecherabhängigen Systems ermöglichen. Sobald jedoch die Menge der sprecherspezifischen Trainingsdaten beschränkt ist, erreicht das sprecherunabhängige System die besseren Resultate. Eine Möglichkeit zur Leistungssteigerung beider Systeme, also sowohl des sprecherabhängigen als auch des sprecherunabhängigen Systems zur Spracherkennung, besteht darin, die vorab gespeicherten Datensätze mehrerer Sprecher, derart zu benutzen, daß auch eine kleine Menge Trainingsdaten ausreicht, um einen neuen Sprecher in ausreichender Qualität zu modellieren. Solch ein Trainingsverfahren wird Sprecheradaption genannt. In [2] wird insbesondere die Sprecheradaption durch eine MAP-Schätzung der Hidden-Markov-Modell-Parameter durchgeführt.

Generell verschlechtern sich Ergebnisse eines Verfahrens zur Erkennung gesprochener Sprache, sobald charakteristische Merkmale der gesprochenen Sprache von charakteristischen Merkmalen der Trainingsdaten abweichen. Beispiele für charakteristische Merkmale sind Sprechereigenschaften oder akustische Kontexte, die sich in Form von Verschleifungen auf die Artikulation der Phoneme auswirken.

Der in [2] verfolgte Ansatz zur Sprecheradaption besteht darin, Parameterwerte der Hidden-Markov-Modelle "nachzuschätzen", wobei diese nach Verarbeitung "offline", d.h. nicht zur Laufzeit des Verfahrens zur Spracherkennung, durchgeführt wird.

In J. Takami et al. "Successive State Splitting Algorithm for Efficient Allophone Modeling", ICASSP 1992, März 1992, Seiten 573 bis 576, San Francisco, USA, wird ein Verfahren zur Erkennung eines vorgegebenen Wortschatzes in gesprochener Sprache offenbart, bei dem in einem Hidden-Markov-Modell Zustände aufgespalten werden. Dafür wird auch die Wahrscheinlichkeitsdichtefunktion der jeweiligen Zustände aufgespalten.

Die **Aufgabe** der Erfindung besteht darin, eine Anordnung und ein Verfahren zur Erkennung eines vorgegebenen Wortschatzes in gesprochener Sprache anzugeben, wobei insbesondere eine Anpassung des akustischen Modells zur Laufzeit (also "Online") vollzogen wird.

Diese Aufgabe wird gemäß den Merkmalen der unabhängigen Patentansprüche gelöst.

Zur Lösung der Aufgabe wird ein Verfahren zur Erkennung eines vorgegebenen Wortschatzes in gesprochener Sprache durch einen Rechner angegeben, in dem aus der gesprochenen Sprache ein Sprachsignal bestimmt wird. Das Sprachsignal wird einer Signalanalyse unterworfen, woraus Merkmalsvektoren zur Beschreibung des digitalisierten Sprachsignals hervorgehen. Eine globale Suche wird zur Abbildung der Merkmalsvektoren auf eine in modellierter Form vorliegende Sprache durchgeführt, wobei jedes Phonem der Sprache durch ein modifiziertes Hidden-Markov-Modell und jeder Zustand des modifizierten Hidden-Markov-Modells durch eine Wahrscheinlichkeitsdichtefunktion beschrieben wird. Es erfolgt eine Anpassung der Wahrscheinlichkeitsdichtefunktion derart, daß sie in eine erste Wahrscheinlichkeitsdichtefunktion und in eine zweite Wahrscheinlichkeitsdichtefunktion aufgespalten wird. Schließlich wird von der globalen Suche eine erkannte Wortfolge bereitgestellt.

Hierbei sei angemerkt, daß die Wahrscheinlichkeitsdichtefunktion, die in eine erste und in eine zweite Wahrscheinlichkeitsdichtefunktion aufgespalten wird, eine Emissionsverteilung für einen vorgegebenen Zustand des modifizierten Hidden-Markov-Modells darstellen kann, wobei diese Emissionsverteilung auch eine Überlagerung mehrerer Wahrscheinlichkeitsdichtefunktionen, z.B. Gauß-Kurven (Gauß'sche Wahrscheinlichkeitsdichteverteilungen), enthalten kann.

Eine erkannte Wortfolge kann dabei auch einzelne Lauten bzw. nur ein einzelnes Wort umfassen.

Sollte im Rahmen der globalen Suche eine Erkennung mit einem hohen Wert für den Abstand zwischen gesprochener Sprache und von der globalen Suche ermittelten dazugehöriger Wortfolge behaftet sein, so kann die Zuordnung eines Nullwortes erfolgen, welches Nullwort anzeigt, das die gesprochene Sprache nicht mit ausreichender Güte erkannt wird.

Es ist ein Vorteil der Erfindung, durch die Aufspaltung der Wahrscheinlichkeitsdichtefunktion in einem durch die Merkmalsvektoren aufgespannten Merkmalsraum neue Bereiche zu schaffen, die signifikante Information in Bezug auf die zu erkennenden digitalisierten Sprachdaten aufweisen und damit eine verbesserte Erkennung zu gewährleisten.

Eine Ausgestaltung besteht darin, daß die Wahrscheinlichkeitsdichtefunktion in die erste und in die zweite Wahrscheinlichkeitsdichtefunktion aufgespalten wird, falls der Abfall eines Entropiewertes unterhalb einer vorgegebenen Schranke liegt.

Die Aufspaltung der Wahrscheinlichkeitsdichtefunktion in Abhängigkeit von einem Entropiewert erweist sich in der Praxis als äußerst vorteilhaft.

Die Entropie ist allgemein ein Maß für eine Unsicherheit bei einer Vorhersage eines statistischen Ereignisses. Die Entropie ist insbesondere mathematisch bestimmbar für Gauß-Verteilungen, wobei eine direkte logarithmische Abhängigkeit zwischen der Streuung σ und der Entropie besteht.

Eine andere Ausgestaltung der Erfindung besteht darin, daß die Wahrscheinlichkeitsdichtefunktionen, insbesondere die erste und die zweite Wahrscheinlichkeitsdichtefunktion jeweils mindestens eine Gauß-Verteilung umfassen.

Die Wahrscheinlichkeitsdichtefunktion des Zustandes wird durch eine Summe mehrerer Gaußverteilungen angenähert. Die einzelnen Gaußverteilungen werden Moden genannt. Bei dem vorgestellten Verfahren werden die Moden insbesondere isoliert voneinander betrachtet. Bei jedem einzelnen Aufspaltvorgang wird eine Mode in zwei Moden aufgeteilt. Wenn die Wahrscheinlichkeitsdichtefunktion aus M Moden gebildet wurde, so wird sie nach dem Aufspaltvorgang aus M+1 Moden gebildet. Wird eine Mode beispielsweise als eine Gaußverteilung angenommen, so kann eine Entropie berechnet werden, wie im Ausführungsbeispiel gezeigt wird.

Eine Online-Adaption ist deshalb vorteilhaft, weil das Verfahren nach wie vor Sprache erkennt, ohne in einer gesonderten Trainingsphase auf die Veränderung des Wortschatzes eingestellt werden zu müssen. Es erfolgt eine Selbstadaption, die insbesondere notwendig wird durch eine veränderte Koartikulation der Sprecher aufgrund eines Hinzufügens eines neuen Wortes.

Die Online-Adaption erfordert demnach keine gesonderte Berechnung der Wahrscheinlichkeitsdichtefunktionen, die wiederum für eine Nicht-Verfügbarkeit des Systems zur Spracherkennung verantwortlich wäre.

Eine Weiterbildung der Erfindung besteht darin, daß für die erste Wahrscheinlichkeitsdichtefunktion und für die zweite Wahrscheinlichkeitsdichtefunktion gleiche Standardabweichungen bestimmt werden. Ein erster Mittelwert der ersten Wahrscheinlichkeitsdichtefunktion und ein zweiter Mittelwert der zweiten Wahrscheinlichkeitsdichtefunktion werden derart bestimmt, daß der erste Mittelwert von dem zweiten Mittelwert verschieden ist.

Dies ist ein Beispiel für die Gewichtung der aus der Wahrscheinlichkeitsdichtefunktion aufgespaltenen ersten und zweiten Wahrscheinlichkeitsdichtefunktion. Es sind auch beliebig andere Gewichtungen vorstellbar, die auf den jeweiligen Anwendungsfall anzupassen sind.

Schließlich ist es eine Weiterbildung, daß das Verfahren mehrfach hintereinander durchgeführt wird und somit eine wiederholte Aufspaltung der Wahrscheinlichkeitsdichtefunktion erfolgt.

Weiterbildungen der Erfindung ergeben sich aus den abhängigen Ansprüchen.

Eine andere Lösung der Aufgabe besteht darin, eine Anordnung mit einer Prozessoreinheit anzugeben, welche Prozessoreinheit derart eingerichtet ist, daß folgende Schritte durchführbar sind:

a) aus der gesprochenen Sprache wird ein digitalisiertes Sprachsignal bestimmt;,

b) auf dem digitalisierten Sprachsignal erfolgt eine Signalanalyse, woraus Merkmalsvektoren zur Beschreibung des digitalisierten Sprachsignals hervorgehen;

c) eine globale Suche zur Abbildung der Merkmalsvektoren erfolgt auf eine in modellierter Form vorliegende Sprache, wobei Phoneme der Sprache durch ein modifiziertes Hidden-Markov-Modell und jeder Zustand des Hidden-Markov-Modells durch eine Wahrscheinlichkeitsdichtefunktion beschreibbar ist;

d) die wird Wahrscheinlichkeitsdichtefunktion durch Veränderung des Wortschatzes angepaßt, indem die Wahrscheinlichkeitsdichtefunktion in eine erste Wahrscheinlichkeitsdichtefunktion und in eine zweite Wahrscheinlichkeitsdichtefunktion aufgespalten wird;

e) von der globalen Suche wird eine erkannte Wortfolge bereitgestellt.

Diese Anordnung ist insbesondere geeignet zur Durchführung des erfindungsgemäßen Verfahrens oder einer seiner vorstehend erläuterten Weiterbildungen.

Ausführungsbeispiele der Erfindung werden nachfolgend anhand der Zeichnung dargestellt und erläutert.

Es zeigt

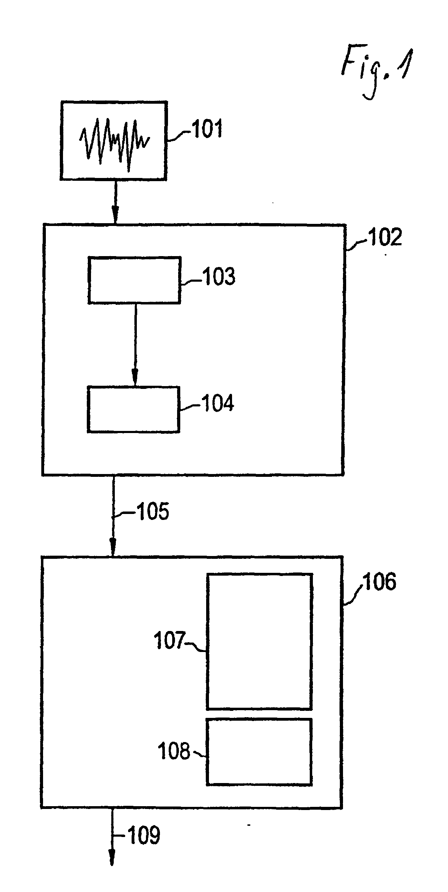

Fig.1     eine Anordnung bzw. ein Verfahren zur Erkennung gesprochener Sprache.

In Figur 1 sind eine Anordnung bzw. ein Verfahren zur Erkennung gesprochener Sprache dargestellt. Zur Erläuterung der nachstehend verwendeten Begriffe sei auf die Beschreibungseinleitung verwiesen.

Ein digitalisiertes Sprachsignal 101 wird in einer Signalanalyse 102 einer Fouriertransformation 103 mit anschließender Merkmalsextraktion 104 unterzogen. Die Merkmalsvektoren 105 werden an ein System zur globalen Suche 106 übermittelt. Die globale Suche 106 berücksichtigt sowohl ein akustisches Modell 107 als auch ein linguistisches Modell 108 zur Bestimmung der erkannten Wortfolge 109. Aus dem digitalisierten Sprachsignal 101 geht somit die erkannte Wortfolge 109 hervor.

In dem akustischen Modell 107 wird das Phoneminventar anhand von Hidden-Markov-Modellen nachgebildet.

Eine Wahrscheinlichkeitsdichtefunktion eines Zustands des Hidden-Markov-Modells wird durch eine Aufsummierung einzelner Gaußscher Moden angenähert. Eine Mode ist insbesondere eine Gaußglocke. Durch Aufsummierung mehrerer Moden entsteht eine Mischung einzelner Gaußglocken und damit eine Modellierung der Emissionswahrscheinlichkeitsdichtefunktion. Anhand eines statistischen Kriteriums wird entschieden, ob der zu erkennende Wortschatz des Spracherkenners durch das Hinzufügen weiterer Moden verbessert modelliert werden kann. Im Fall der vorliegenden Erfindung wird dies insbesondere bei Erfüllung des statistischen Kriteriums durch inkrementelles Aufspalten bereits existierender Moden erreicht.

Die Entropie ist definiert durch

$$H_p = - \int_{-\infty}^{\infty} p(\bar{x}) \log_2 p(\bar{x}) \, d\bar{x} \qquad (1)$$

unter der Annahme, daß $p(\bar{x})$ eine Gauß-Verteilung mit einer diagonalen Kovarianzmatrix ist, also

$$p(\vec{x}) \;=\; \mathcal{N}(\vec{\mu}, \sigma_n) \;=\; \frac{1}{\sqrt{(2\pi)^N}} \, \frac{1}{\prod_n \sigma_n} \cdot \exp\!\left(-\,\frac{1}{2} \sum_n \frac{(x_n - \mu_n)^2}{\sigma_n^2}\right)$$

$$(2)$$

erhält man

$$H_p \;=\; \sum_{n=1}^{N} \log_2 \sqrt{2\pi e}\;\, \sigma_n \qquad\qquad (3),$$

wobei

$\mu$      den Erwartungswert,
$\sigma_n$     die Streuung für jede Komponente n und
N      die Dimension des Merkmalsraums

bezeichnen.

Die wahre Verteilung $p(\vec{x})$ ist nicht bekannt. Sie wird insbesondere als Gaußverteilung angenommen. Im akustischen Modell wird die Wahrscheinlichkeit $p(\vec{x})$ anhand von Stichproben angenähert mit

$$\hat{p}(\vec{x}) \;=\; \mathcal{N}\!\left(\bar{\vec{\mu}}, \sigma_n\right),$$

wobei

$$\bar{\vec{\mu}} \;=\; \frac{1}{L} \sum_{l=1}^{L} \vec{x}_l$$

einen Mittelwert über L Beobachtungen darstellt. Die korrespondierende Entropie als Funktion von $\hat{\mu}$ ist gegeben durch

$$H_{\hat{p}}(\hat{\mu}) \;=\; -\int_{-\infty}^{\infty} p(\vec{x})\,\log_2 \hat{p}(\vec{x})\;d\vec{x} \qquad\qquad (4),$$

was schließlich zu

$$H_{\hat{p}}(\hat{\mu}) = H_p + \sum_{n=1}^{N} \frac{(\mu_n - \hat{\mu}_n)^2}{\sigma_n^2} \log_2 \sqrt{e} \qquad (5)$$

führt.

Der Erwartungswert

$$E\left\{(\mu_n - \hat{\mu}_n)^2\right\}$$

beträgt $\frac{1}{L}\sigma_n^2$, so daß der Erwartungswert von $H_{\hat{p}}(\hat{\mu})$ gegeben ist als

$$H_{\hat{p}} = E\left\{H_{\hat{p}}(\hat{\mu})\right\} = H_p + \frac{N}{L} \log_2 \sqrt{e} \qquad (6).$$

Für die Entropie einer Mode, die mit einer Gauß-Verteilung mit einer diagonalen Kovarianzmatrix bestimmt wird, ergibt sich also Gleichung (3). Der Prozeß wird nun mit einer Schätzung angenähert. Die Entropie des angenäherten Prozesses ergibt sich zu

$$\hat{H} = H + \frac{N}{L} \log_2 \sqrt{e} \qquad (7).$$

Je größer die Anzahl L der Stichproben ist, um so besser wird die Abschätzung und um so mehr nähert sich die geschätzte Entropie $\hat{H}$ der wahren Entropie H an.

Es soll nun

$$p(\bar{x}) = \mathcal{N}(\bar{\hat{\mu}}, \sigma_n) \qquad (8)$$

die aufzuteilende Mode sein. Ferner wird angenommen, daß die zwei Gauß-Verteilungen, die durch den Aufteilungsprozeß entstehen, identische Standardabweichungen $\sigma^s$ haben und gleich gewichtet sind. Dies ergibt

$$\hat{p}^s(\bar{x}) = \frac{1}{2} \mathcal{N}\left(\bar{\hat{\mu}}_1^s, \sigma^s\right) + \frac{1}{2} \mathcal{N}\left(\bar{\hat{\mu}}_2^s, \sigma^s\right) \qquad (9).$$

Unter der Annahme, daß $\mu_1 \approx \hat{\mu}_1$, $\mu_2 \approx \hat{\mu}_2$ und daß $\mu_1$ ausreichend weit entfernt von $\mu_2$ ist, ergibt sich die Entropie der aufgespaltenen Wahrscheinlichkeitsdichtefunktion jeweils zu

$$\hat{H}^s = 1 - \sum_{n=1}^{N} \log_2 \sqrt{2\pi e}\ \sigma_n^s + \frac{1}{2}\left(\log_2 \sqrt{e}\ \frac{N}{L_1} + \log_2 \sqrt{e}\ \frac{N}{L_2}\right) \quad (10).$$

Als Aufteilungskriterium wird eine Verminderung der Entropie durch den Aufspaltungsvorgang gefordert, also

$$\hat{H} - \hat{H}^s > C \quad (11),$$

wobei C (mit C > 0) eine Konstante ist, die den gewünschten Abfall der Entropie darstellt. Wird

$$\frac{L}{2} = L_1 = L_2 \quad (12)$$

angenommen, so ergibt sich hierdurch

$$\sum_{n=1}^{N} \log_2 \frac{\sigma_n}{\sigma_n^s} > \log_2 \sqrt{e}\ \frac{N}{L} + 1 + C \quad (13).$$

Eine Möglichkeit, die Lage der Mittelpunkte der beiden neuen Moden zu bestimmen, wird im folgenden aufgezeigt. Eine bevorzugte Vorgabe besteht darin, daß Kriterium zum Aufspalten zu erfüllen. In dem angeführten Beispiel wird $\hat{\mu}_1^s$ der Wert von $\hat{\mu}$ zugewiesen. $\hat{\mu}_2^s$ erhält eine Maximum-Likelihood-Schätzung derjenigen Beobachtungen, die im Viterbi-Pfad auf $\hat{\mu}$ abgebildet werden. Diese Bestimmungen zeigen lediglich eine Möglichkeit auf, ohne daß eine Einschränkung des vorgestellten Verfahrens auf diese Möglichkeit beabsichtigt ist.

Die folgenden Schritte der Beispielanwendung zeigen die Einbettung in eine Anordnung zur Spracherkennung bzw. ein Verfahren zur Spracherkennung.

Schritt 1: Initialisierung: $\vec{\mu}_1^s = \vec{\mu}$, $\vec{\mu}_2^s = \vec{\mu}$.

Schritt 2: Erkennen der Äußerung , Analysieren des Viterbi-Pfads;

Schritt 3: Für jeden Zustand und für jede Mode des Viterbi-Pfades:

Schritt 3.1: Bestimme $\sigma_n$ ;

Schritt 3.2: Bestimme $L_2$ auf Grundlage derjenigen Beobachtungen, die näher an $\vec{\mu}_2^s$ als an $\vec{\mu}_1^s$ liegen und setze $L = L_2$. Falls $\vec{\mu}_2^s$ und $\vec{\mu}_1^s$ identisch sind, so ordne die zweite Hälfte der Merkmalsvektoren $\vec{\mu}_2^s$ und die erste Hälfte der Merkmalsvektoren $\vec{\mu}_1^s$ zu.

Schritt 3.3: Bestimme $\sigma_n^s$ entsprechend auf Grundlage der $L_2$-Außerungen;

Schritt 3.4: Ermittle $\vec{\mu}_2^s$ neu auf Grundlage des Mittelwerts derjenigen Beobachtungen, die näher an $\vec{\mu}_2^s$ als an $\vec{\mu}_1^s$ liegen;

Schritt 3.5: Werte Aufteilungskriterium nach Gleichung (13) aus;

Schritt 3.6: Falls Aufteilungskriterium nach Gleichung (13) positiv ist, generiere zwei neue Moden mit den Mittelpunkten $\vec{\mu}_1^s$ und $\vec{\mu}_2^s$.

Schritt 4: Gehe zu Schritt 2.

Im Rahmen dieses Dokuments wurden folgende Veröffentlichungen zitiert:

[1] N. Haberland et al.: "Sprachunterricht - Wie funktioniert die computerbasierte Spracherkennung?", c't - Magazin für Computertechnik - 5/1998, Heinz Heise Verlag, Hannover, 1998, Seiten 120 bis 125.

[2] C. H. Lee et al.: "Speaker Adaptation Based on MAP Estimation of HMM Parameters"; Proc. IEEE Intern. Conference on Acoustics, Speech and Signal Processing, Seiten II-588 bis II-561.

**Patentansprüche**

1. Verfahren zur Erkennung eines vorgegebenen Wortschatzes in gesprochener Sprache durch einen Rechner,

a) bei dem aus der gesprochenen Sprache ein digitalisiertes Sprachsignal bestimmt wird,
b) bei dem auf dem digitalisierten Sprachsignal eine Signalanalyse durchgeführt wird, woraus Merkmalsvektoren zur Beschreibung des digitalisierten Sprachsignals hervorgehen,
c) bei dem eine globale Suche zur Abbildung der Merkmalsvektoren auf eine in modellierter Form vorliegende Sprache durchgeführt wird, wobei Phoneme der Sprache durch ein modifiziertes Hidden-Markov-Modell und jeder Zustand des Hidden-Markov-Modells durch eine Wahrscheinlichkeitsdichtefunktion beschrieben wird,
d) bei dem die Wahrscheinlichkeitsdichtefunktion durch Veränderung des Wortschatzes angepaßt wird, indem die Wahrscheinlichkeitsdichtefunktion in eine erste Wahrscheinlichkeitsdichtefunktion und in eine zweite Wahrscheinlichkeitsdichtefunktion aufgespalten wird, falls der Abfall eines Entropiewertes der aufgespaltenen Wahrscheinlichkeitsdichtefunktion unterhalb einer vorgegebenen Schranke liegt,
e) bei dem von der globalen Suche eine erkannte Wortfolge bereitgestellt wird.

2. Verfahren zur Erkennung eines vorgegebenen Wortschatzes in gesprochener Sprache durch einen Rechner,

a) bei dem aus der gesprochenen Sprache ein digitalisiertes Sprachsignal bestimmt wird,
b) bei dem auf dem digitalisierten Sprachsignal eine Signalanalyse durchgeführt wird, woraus Merkmalsvektoren zur Beschreibung des digitalisierten Sprachsignals hervorgehen,
c) bei dem eine globale Suche zur Abbildung der Merkmalsvektoren auf eine in modellierter Form vorliegende Sprache durchgeführt wird, wobei Phoneme der Sprache durch ein modifiziertes Hidden-Markov-Modell und jeder Zustand des Hidden-Markov-Modells durch eine Wahrscheinlichkeitsdichtefunktion beschrieben wird,
d) bei dem die Wahrscheinlichkeitsdichtefunktion durch Veränderung des Wortschatzes angepaßt wird, indem die Wahrscheinlichkeitsdichtefunktion in eine erste Wahrscheinlichkeitsdichtefunktion und in eine zweite Wahrscheinlichkeitsdichtefunktion aufgespalten wird,
e) bei dem die Veränderung des Wortschatzes zur Laufzeit des Verfahrens durchgeführt wird, falls der Abfall eines Entropiewertes der aufgespaltenen Wahrscheinlichkeitsdichtefunktion unterhalb einer vorgegebenen Schranke liegt,
f) bei dem von der globalen Suche eine erkannte Wortfolge bereitgestellt wird.

3. Verfahren nach Anspruch 1 oder 2,
bei dem die Veränderung des Wortschatzes bedingt ist durch Hinzufügen eines Wortes zum Wortschatz oder bei dem sich Aussprachegewohnheiten eines Sprechers ändern.

4. Verfahren nach einem der vorhergehenden Ansprüche,
bei dem die erste Wahrscheinlichkeitsdichtefunktion und die zweite Wahrscheinlichkeitsdichtefunktion jeweils mindestens eine Gaußverteilung umfassen.

5. Verfahren nach Anspruch 4,
bei dem für die erste Wahrscheinlichkeitsdichtefunktion und für die zweite Wahrscheinlichkeitsdichtefunktion gleiche Standardabweichungen, ein erster Mittelwert der ersten Wahrscheinlichkeitsdichtefunktion und ein zweiter Mittelwert der zweiten Wahrscheinlichkeitsdichtefunktion ermittelt werden, wobei der erste Mittelwert von dem zweiten Mittelwert verschieden ist.

6. Verfahren nach einem der vorhergehenden Ansprüche,
bei dem die Aufspaltung mehrfach durchgeführt wird.

**7.** Anordnung zur Erkennung eines vorgegebenen Wortschatzes in gesprochener Sprache mit einer Prozessoreinheit, die derart eingerichtet ist, daß

a) aus der gesprochenen Sprache ein digitalisiertes Sprachsignal bestimmbar ist,
b) auf dem digitalisierten Sprachsignal eine Signalanalyse durchführbar ist, woraus Merkmalsvektoren zur Beschreibung des digitalisierten Sprachsignals hervorgehen,
c) eine globale Suche zur Abbildung der Merkmalsvektoren auf eine in modellierter Form vorliegende Sprache erfolgt, wobei Phoneme der Sprache durch ein modifiziertes Hidden-Markov-Modell und jeder Zustand des Hidden-Markov-Modells durch eine Wahrscheinlichkeitsdichtefunktion beschreibbar ist,
d) die Wahrscheinlichkeitsdichtefunktion durch Veränderung des Wortschatzes angepaßt wird, indem die Wahrscheinlichkeitsdichtefunktion in eine erste Wahrscheinlichkeitsdichtefunktion und in eine zweite Wahrscheinlichkeitsdichtefunktion aufgespalten wird, falls der Abfall eines Entropiewertes der aufgespaltenen Wahrscheinlichkeitsdichtefunktion unterhalb einer vorgegebenen Schranke liegt,
e) von der globalen Suche eine erkannte Wortfolge bereitgestellt wird.

**8.** Anordnung zur Erkennung eines vorgegebenen Wortschatzes in gesprochener Sprache mit einer Prozessoreinheit, die derart eingerichtet ist, daß

a) aus der gesprochenen Sprache ein digitalisiertes Sprachsignal bestimmbar ist,
b) auf dem digitalisierten Sprachsignal eine Signalanalyse durchführbar ist, woraus Merkmalsvektoren zur Beschreibung des digitalisierten Sprachsignals hervorgehen,
c) eine globale Suche zur Abbildung der Merkmalsvektoren auf eine in modellierter Form vorliegende Sprache erfolgt, wobei Phoneme der Sprache durch ein modifiziertes Hidden-Markov-Modell und jeder Zustand des Hidden-Markov-Modells durch eine Wahrscheinlichkeitsdichtefunktion beschreibbar ist,
d) die Wahrscheinlichkeitsdichtefunktion durch Veränderung des Wortschatzes angepaßt wird, indem die Wahrscheinlichkeitsdichtefunktion in eine erste Wahrscheinlichkeitsdichtefunktion und in eine zweite Wahrscheinlichkeitsdichtefunktion aufgespalten wird,
e) die Veränderung des Wortschatzes zur Laufzeit des Verfahrens durchgeführt wird, falls der Abfall eines Entropiewertes der aufgespaltenen Wahrscheinlichkeitsdichtefunktion unterhalb einer vorgegebenen Schranke liegt,
f) von der globalen Suche eine erkannte Wortfolge bereitgestellt wird.

**Claims**

**1.** Method for computer recognition of a predefined vocabulary in spoken language,

a) in which a digitized speech signal is determined from the spoken language,
b) in which a signal analysis is carried out on the digitized speech signal, from which signal analysis emerge feature vectors for describing the digitized speech signal,
c) in which a global search is carried out for mapping the feature vectors onto a language present in modelled form, phonemes of the language being described by a modified Hidden Markov Model and each state of the Hidden Markov Model being described by a probability density function,
d) in which the probability density function is adapted by alteration of the vocabulary by splitting the probability density function into a first probability density function and into a second probability density function, if the fall in an entropy value of the split probability density function lies below a predefined limit,
e) in which a recognized word order is provided by the global search.

**2.** Method for computer recognition of a predefined vocabulary in spoken language,

a) in which a digitized speech signal is determined from the spoken language,
b) in which a signal analysis is carried out on the digitized speech signal, from which signal analysis emerge feature vectors for describing the digitized speech signal,
c) in which a global search is carried out for mapping the feature vectors onto a language present in modelled form, phonemes of the language being described by a modified Hidden Markov Model and each state of the Hidden Markov Model being described by a probability density function,
d) in which the probability density function is adapted by alteration of the vocabulary by splitting the probability density function into a first probability density function and into a second probability density function,

e) in which the alteration of the vocabulary is carried out at the execution time of the method, if the fall in an entropy value of the split probability density function lies below a predefined limit,

f) in which a recognized word order is provided by the global search.

**3.** Method according to Claim 1 or 2,

in which the alteration of the vocabulary is brought about by addition of a word to the vocabulary or in which pronunciation habits of a speaker change.

**4.** Method according to one of the preceding claims,

in which the first probability density function and the second probability density function each comprise at least one Gaussian distribution.

**5.** Method according to Claim 4,

in which, for the first probability density function and for the second probability density function, identical standard deviations are determined, a first mean value of the first probability density function is determined and a second mean value of the second probability density function is determined, the first mean value being different from the second mean value.

**6.** Method according to one of the preceding claims,

in which the splitting is carried out a number of times.

**7.** Arrangement for recognition of a predefined vocabulary in spoken language having a processor unit which is set up in such a way that

a) a digitized speech signal can be determined from the spoken language,

b) a signal analysis can be carried out on the digitized speech signal, from which: signal analysis emerge feature vectors for describing the digitized speech signal,

c) a global search is carried out for mapping the feature vectors onto a language present in modelled form, phonemes of the language being capable of being described by a modified Hidden Markov Model and each state of the Hidden Markov Model being capable of being described by a probability density function,

d) the probability density function is adapted by alteration of the vocabulary by splitting the probability density function into a first probability density function and into a second probability density function, if the fall in an entropy value of the split probability density function lies below a predefined limit,

e) a recognized word order is provided by the global search.

**8.** Arrangement for recognition of a predefined vocabulary in spoken language having a processor unit which is set up in such a way that

a) a digitized speech signal can be determined from the spoken language,

b) a signal analysis can be carried out on the digitized speech signal, from which signal analysis emerge feature vectors for describing the digitized speech signal,

c) a global search is carried out for mapping the feature vectors onto a language present in modelled form, phonemes of the language being capable of being described by a modified Hidden Markov Model and each state of the Hidden Markov Model being capable of being described by a probability density function,

d) the probability density function is adapted by alteration of the vocabulary by splitting the probability density function into a first probability density function and into a second probability density function,

e) the alteration of the vocabulary is carried out at the execution time of the method, if the fall in an entropy value of the split probability density function lies below a predefined limit,

f) a recognized word order is provided by the global search.

**Revendications**

**1.** Procédé de reconnaissance d'un vocabulaire prédéterminé dans un langage parlé au moyen d'un ordinateur,

a) dans lequel un signal vocal numérisé est déterminé à partir du langage parlé,

b) dans lequel une analyse du signal est effectuée sur le signal vocal numérisé, de laquelle émanent des vecteurs de caractéristiques pour décrire le signal vocal numérisé,

c) dans lequel une recherche globale est effectuée pour représenter les vecteurs de caractéristiques par un langage se présentant sous une forme modélisée, des phonèmes du langage étant décrits par un modèle de Markov caché modifié et chaque état du modèle de Markov caché par une fonction de densité de probabilité,

d) dans lequel la fonction de densité de probabilité est adaptée par modification du vocabulaire, en divisant la fonction de densité de probabilité en une première fonction de densité de probabilité et en une deuxième fonction de densité de probabilité si la chute d'une valeur entropique de la fonction de densité de probabilité divisée se situe au-dessous d'une limite prédéterminée,

e) dans lequel une séquence reconnue de mots est fournie par la recherche globale.

2. Procédé de reconnaissance d'un vocabulaire prédéterminé dans un langage parlé au moyen d'un ordinateur,

a) dans lequel un signal vocal numérisé est déterminé à partir du langage parlé,

b) dans lequel une analyse du signal est effectuée sur le signal vocal numérisé, de laquelle émanent des vecteurs de caractéristiques pour décrire le signal vocal numérisé,

c) dans lequel une recherche globale est effectuée pour représenter les vecteurs de caractéristiques par un langage se présentant sous une forme modélisée, des phonèmes du langage étant décrits par un modèle de Markov caché modifié et chaque état du modèle de Markov caché par une fonction de densité de probabilité,

d) dans lequel la fonction de densité de probabilité est adaptée par modification du vocabulaire, en divisant la fonction de densité de probabilité en une première fonction de densité de probabilité et en une deuxième fonction de densité de probabilité,

e) dans lequel la modification du vocabulaire est effectuée pendant la mise en oeuvre du procédé si la chute d'une valeur entropique de la fonction de densité de probabilité divisée se situe au-dessous d'une limite prédéterminée,

f) dans lequel une séquence reconnue de mots est fournie par la recherche globale.

3. Procédé selon la revendication 1 ou 2, dans lequel la modification du vocabulaire est conditionnée par l'ajout d'un mot au vocabulaire ou dans lequel les habitudes de prononciation d'un locuteur changent.

4. Procédé selon l'une des revendications précédentes, dans lequel la première fonction de densité de probabilité et la deuxième fonction de densité de probabilité comprennent chacune au moins une distribution de Gauss.

5. Procédé selon la revendication 4, dans lequel on calcule pour la première fonction de densité de probabilité et pour la deuxième fonction de densité de probabilité des écarts-type identiques, une première moyenne de la première fonction de densité de probabilité et une deuxième moyenne de la deuxième fonction de densité de probabilité, la première moyenne étant différente de la deuxième moyenne.

6. Procédé selon l'une des revendications précédentes, dans lequel la division est effectuée à plusieurs reprises.

7. Dispositif de reconnaissance d'un vocabulaire prédéterminé dans un langage parlé, comprenant une unité à processeur qui est configurée de telle manière que

a) un signal vocal numérisé peut être déterminé à partir du langage parlé,

b) une analyse du signal peut être effectuée sur le signal vocal numérisé, de laquelle émanent des vecteurs de caractéristiques pour décrire le signal vocal numérisé,

c) une recherche globale est effectuée pour représenter les vecteurs de caractéristiques par un langage se présentant sous une forme modélisée, des phonèmes du langage pouvant être décrits par un modèle de Markov caché modifié et chaque état du modèle de Markov caché par une fonction de densité de probabilité,

d) la fonction de densité de probabilité est adaptée par modification du vocabulaire, en divisant la fonction de densité de probabilité en une première fonction de densité de probabilité et en une deuxième fonction de densité de probabilité si la chute d'une valeur entropique de la fonction de densité de probabilité divisée se situe au-dessous d'une limité prédéterminée,

e) une séquence reconnue de mots est foumie par la recherche globale.

8. Dispositif de reconnaissance d'un vocabulaire prédéterminé dans un langage parlé, comprenant une unité à processeur qui est configurée de telle manière que

a) un signal vocal numérisé peut être déterminé à partir du langage parlé,

b) une analyse du signal peut être effectuée sur le signal vocal numérisé, de laquelle émanent des vecteurs de caractéristiques pour décrire le signal vocal numérisé,

c) une recherche globale est effectuée pour représenter les vecteurs de caractéristiques par un langage se présentant sous une forme modélisée, des phonèmes du langage pouvant être décrits par un modèle de Markov caché modifié et chaque état du modèle de Markov caché par une fonction de densité de probabilité,

d) la fonction de densité de probabilité est adaptée par modification du vocabulaire, en divisant la fonction de densité de probabilité en une première fonction de densité de probabilité et en une deuxième fonction de densité de probabilité,

e) la modification du vocabulaire est effectuée pendant la mise en oeuvre du procédé si la chute d'une valeur entropique de la fonction de densité de probabilité divisée se situe au-dessous d'une limite prédéterminée,

f) une séquence reconnue de mots est fournie par la recherche globale.

Fig. 1